# EUROPEAN PATENT SPECIFICATION

(11) **EP 3 716 559 B1**
(45) Date of publication and mention of the grant of the patent: **30.08.2023**
(21) Application number: 19164974.8
(22) Date of filing: 25.03.2019
(51) Int. Cl.: H04L 27/26

(54) **METHOD FOR REDUCTION OF SIGNAL PEAK TO AVERAGE POWER OF AN INPUT SIGNAL OF A TRANSMITTER DEVICE**
VERFAHREN ZUR REDUZIERUNG DER SIGNALSPITZE AUF DIE MITTLERE LEISTUNG EINES EINGANGSSIGNALS EINER SENDEVORRICHTUNG
PROCÉDÉ DE RÉDUCTION DE LA PUISSANCE CRÊTE D'UN SIGNAL D'ENTRÉE D'UN DISPOSITIF D'ÉMETTEUR PAR RAPPORT À LA PUISSANCE MOYENNE

(43) Date of publication of application: 30.09.2020
(73) Proprietor: SHENZHEN GOODIX TECHNOLOGY CO., LTD., Shenzhen, Guangdong 518045 (CN)
(72) Inventor: Fließ, Thomas, 01097 Dresden (DE)
(74) Representative: Lippert Stachow Patentanwälte Rechtsanwälte Partnerschaft mbB

(56) References cited:
- EP-A1- 1 835 678
- EP-A2- 2 136 524
- WO-A1-2008/074801
- US-A1- 2010 316 041

## Description

The invention relates to a method for reduction of signal peak to average power of an input signal, which is inputted to analog radio frequency stage of a transmitter device. The method is performed by a PAPR limiter, which is a unit of the transmitter device.

Modern communication standards, like LTE (long-term evolution) and NB-IoT (narrowband internet-of-things) deploy modulation schemes like OFDM (orthogonal frequency division multiplex) or SC-FDMA (single carrier frequency division multiple access) for transmission of synchronization, pilot and data signals. Compared with other legacy techniques, these modulation schemes provide better utilization of available spectrum resources, inherent separation of multiple users on the same channel and better robustness against various imperfections in the entire chain from transmitter on one end of the communication link to the receiver on the other end.

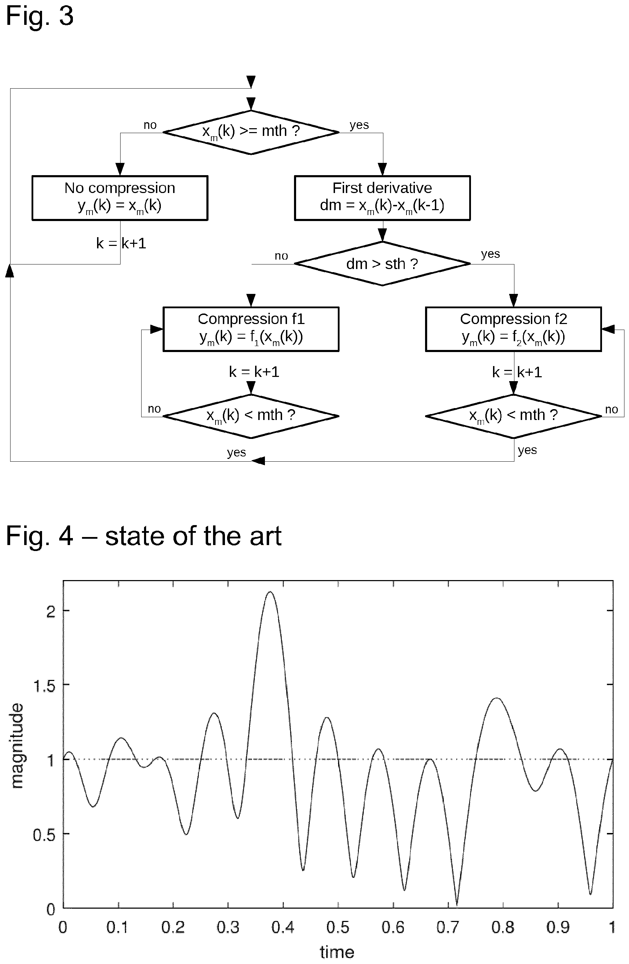

On the negative side, strictly bandlimited signals in OFDM and SC-FDMA systems possess rather unfavorable amplitude characteristics where the instantaneous magnitude can exceed the root mean square (RMS) magnitude by a significant margin for a limited amount of time. The root mean square magnitude is defined for a continuously varying function in terms of an integral of the squares of the instantaneous values during a cycle. This characteristic is usually expressed in terms of PAPR (peak to average power ratio). Figure 4 depicts the magnitude of a typical SC-FDMA signal over time, normalized to its RMS value which is marked as dashed line.

The frequency of occurrence of signal peaks drops fast with increasing magnitude, i.e. very high peaks appear much less frequently than medium peaks.

Since real transmitter devices cannot be designed and manufactured flawlessly, various key characteristics and requirements have been defined by the standardization organizations that each device needs to fulfil before it gets certification to enter a public network. The two requirements relevant for this invention are spectral emissions and EVM (error vector magnitude).

Spectral emissions comprise the RF (radio frequency) power of signals a device emits outside of its allocated frequency range. This characterizes the amount of distortions a certain device creates on other communication links that deploy the same or a different radio access technology. To create a pass/fail criterion, so-called spectral masks have been provided, that define frequency dependent maximum power levels a device must not exceed. Reference is made to 3GPP TS 36.101. Since manufacturing tolerances can have a strong impact on spectral emissions, manufacturers tend to design their devices such that a certain margin exists between nominal design and spectral mask defined by standardization organizations.

Error vector magnitude describes average and peak difference between transmitted modulated data signal and ideal modulation points in relation to average magnitude of the modulated data symbol. Each derivation of the transmitted signal from its ideal shape, e.g. by non-linear elements in the transmitter device, increases EVM to some extent.

The higher EVM becomes, the more the capacity of error correction codes on the transmission needs to be exploited to ensure an error free transfer of payload information. The payload is the part of transmitted data that is the actual intended message. This reduces the error correction capabilities for distortions on the radio link itself. Hence, a balance needs to be found between cost efficient designs and allowable manufacturing tolerances on one side and the quality of transmitted signals on the other. Standardization organizations also define EVM limits as pass/fail criterion for certification.

Transmitters in communication devices are usually designed according to the required maximum RF output power. Maximum RF power determines architecture, size, supply power consumption and hence cost of the device to a large extend.

Here, transmitters for OFDM or SC-FDMA suffer from the high PAPR of the signals to be transmitted. For instance, PAPR for OFDM signals can reach 14dB or more, which means that for an average output power of 100mW a peak power of about 2.5W must be supported by the transmitter architecture.

Hence, designers tend to reduce PAPR of the ideal signal to be transmitted by compression to some more reasonable peak values, exploiting signal statistics, i.e. considering that very high peaks appear only infrequently in the signal and therefore have only limited impact on average signal characteristics like spectrum or EVM.

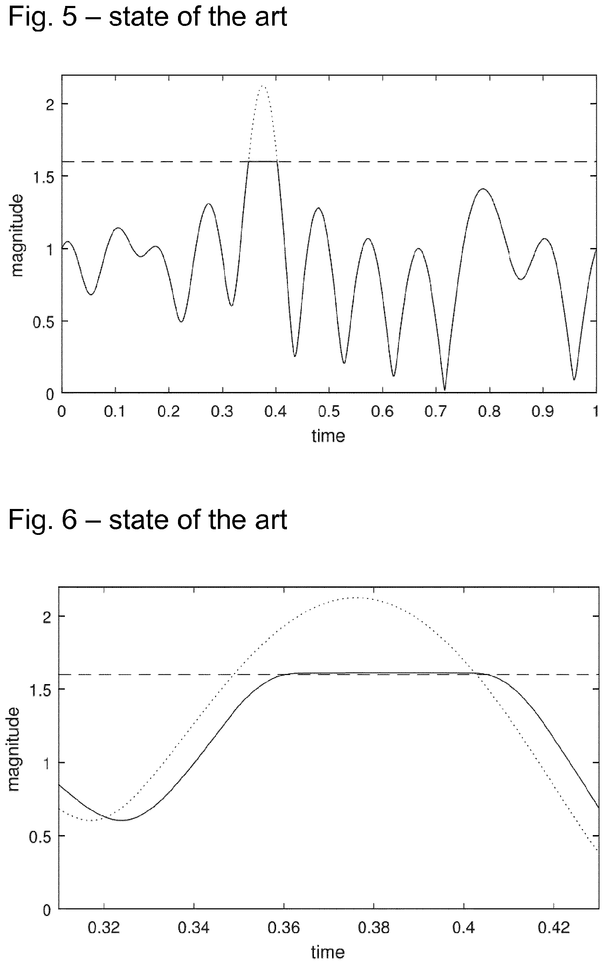

An example for compression by hard limitation is depicted in figure 5 where the magnitude of a typical SC-FDMA signal is saturated to 1.6*RMS value.

In general, EVM requirements limit the potential for PAPR reductions. Hence, it is desirable to apply signal compression only to periods in the signal where it is really needed.

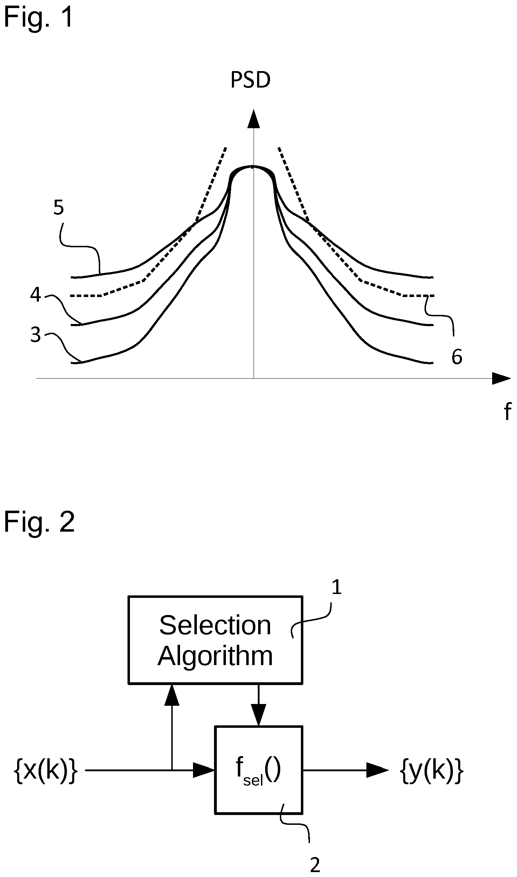

Furthermore, PAPR reduction causes emission of more RF power outside the allocated spectrum. Hence, the signal compression method must be chosen such that spectral masks are not violated. Figure 1 depicts power spectral density (PSD) over frequency for an uncompressed signal 3, a signal with low compression 4, and a signal with high compression 5, with the latter violating spectral mask requirements 6.

In the state-of-the-art, following methods are present:
Firstly, "signal compression in analog domain". When implementing this method, the designer must consider that for systems deploying OFDM and SC-FDMA since very good linearity is required for uncompressed periods of the signal to meet spectral mask requirements. So, analog signal compression is hardly applicable to OFDM / SC-FDMA systems since these signals require a high linearity in the non-compressed part of the transfer function to meet spectral mask requirements. It is very challenging to combine this with a non-linear compression function. Furthermore, sample variations caused by the production process require either overdesigned systems or costly calibration.

Secondly, "digital saturation in time domain". In this method, magnitude of transmitted signal is simply clipped to the desired peak value. Application of this method on a typical SC-FDMA signal is illustrated in figure 5. Simple saturation of the digital signal in time domain requires the least effort but causes relatively high spectral emissions. Hence, the amount of saturation that can be achieved without violating spectral mask requirements is very limited. Thirdly, "digital saturation and time domain filtering". In this method, magnitude clipping as in digital saturation in time domain method is utilized. In order to achieve a smooth transition between uncompressed and compressed signal periods, filtering is applied. EP2136524 discloses selecting a window function for PAPR suppression according to the slope of the amplitude at a point where an amplitude threshold is exceeded. The width of the suppression window is dependent on the frequency.

Impact on a typical SC-FDMA signal when applying such a method is illustrated in figure 6 including unwanted delay by filtering as a side effect. A combination of saturation and time domain filtering creates significantly less spectral emissions than in the digital saturation in time domain method, but filtering effort can be quite high, especially when the data path runs on a high sampling rate. Effort relates here to chip area and power consumption. Furthermore, other signals running in parallel must be delayed as well, e.g. the path for the phase signal in a polar transmitter architecture, increasing the overall effort as well.

Fourthly, "clipping and filtering in time as well as frequency domain". Various methods have been introduced to combat spectrum emissions that apply clipping, frequency and time domain filtering. Extended methods comprising saturation, filtering in time and frequency domain provide best results in terms of signal properties (EVM and spectral emissions) but effort and delay are even higher than in methods using digital saturation and time domain filtering. The object of the present invention is to design a low complexity, low effort method to reduce PAPR of signals to be transmitted, for example signals which deploy OFDM or SC-FDMA. This targets a reduction of maximum power a transmit path has to be designed for, aiming reduction of complexity, size, cost, and power consumption. Nevertheless, requirements given by standardization bodies like 3GPP shall be met, especially concerning spectral mask and EVM.

The object of the invention will be solved by a method as described in the independent claim.

The input signal which is optimized by the inventive method has to be modulated by a bandlimited modulation scheme that possesses a special correlation between peak magnitude and slope, for example, an OFDM or SC-FDMA modulated input signal.

The inventive method is performed by a peak to average power ratio (PAPR) limiter, which is a unit of the transmitter device. Parameters mth and sth are stored in a memory of the transmitter device and will be loaded during operation into the limiter unit.

The invented method performs a signal compression sample by sample, hence on a per sample basis, which means that a selected compression function is applied to a certain sample of the input signal, without considering the history of the input signal in time. This requires much less effort in terms of chip area and power consumption than filter-based solutions.

The method choses a certain non-linear compression function from a pre-defined set of functions as soon as the input signal magnitude passes a certain magnitude threshold mth. The magnitude threshold mth is an input parameter to the algorithm that is optimized according to system requirements, e.g. desired maximum PAPR, accepted spectral emissions, concrete modulation scheme etc. In a first embodiment, the choice is made using the first derivative of the input signal magnitude over time as a decision metric.

This is based on the observation that the subsequent maximum of a signal peak is correlated to the slope of an OFDM or SC-FDMA signal, which is the first derivative, when passing this well selected threshold.

The invented method uses digital signal processing which is in contrast to analog implementations better reproducible and parametrizable.

The invented method switches between multiple compression functions based on the decision metric derived from the first-order derivative of the input signal magnitude over time. This improves performance with respect to spectral mask and EVM substantially compared with simple static compression methods.

So, the inventive method comprises of a selection algorithm for a signal compression function and a signal processing block that performs the actual signal compression, aiming a reduction of PAPR to a certain target PAPR.

In general, the input signal possesses a very high PAPR which would require too much headroom in the design to cope with the high peak power. Since such very high peaks occur only infrequently, it is possible to compress the input signal magnitude, sacrificing some signal quality in terms of spectral emissions and EVM. Basic requirements for those two key characteristics must be met however.

In the invention, non-linear functions on single samples are used to perform compression of OFDM or SC-FDMA signals. Such a function can be expressed as yₘ(k) = f(xₘ(k)). Such functions f() can be used to reduce PAPR with acceptable loss of signal quality in terms of spectral emissions and EVM.

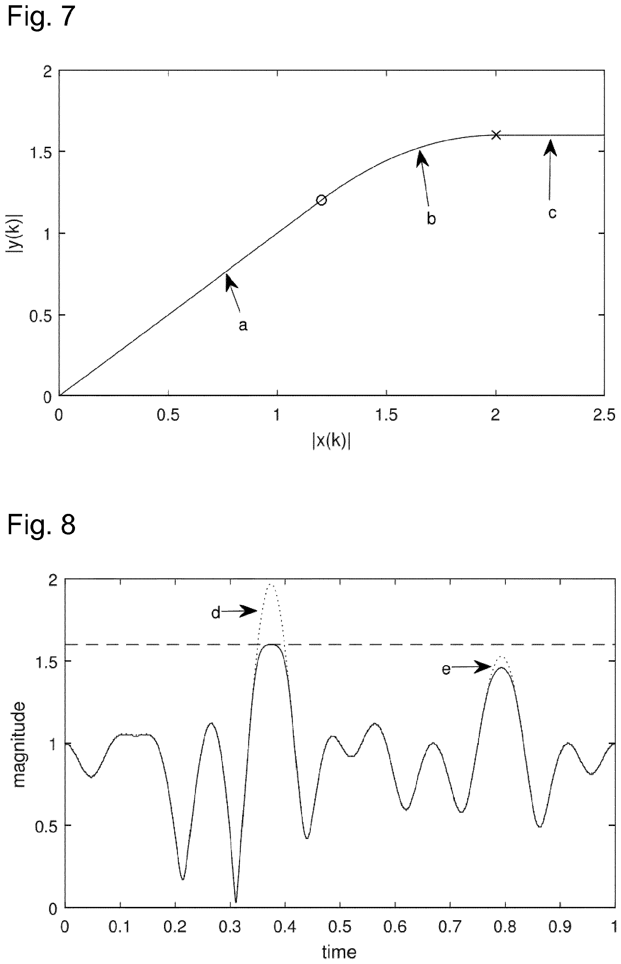

Static application of a single compression function on each sample alone would apply compression of peaks exceeding the target PAPR, which is desired. However, some compression would also be applied to peaks that reach their maximum just below the target PAPR. For illustration refer to figure 8 where wanted compression is applied during time interval 'd' while unwanted compression is applied during time interval 'e'. This unwanted compression is a side effect of the static application of compression function f() that increases spectral emissions and EVM.

To circumvent that, the invented method exploits a property of OFDM or SC-FDMA signals: It can be observed that steepness of a rising signal slope is correlated to the maximum of the subsequent signal.

The selection algorithm as part of the inventive method detects the moment when the input signal magnitude exceeds a certain magnitude threshold mth the first time. At this moment, the first-order derivative over time of the input signal (i.e. the magnitude difference of consecutive samples) is calculated as decision metric: dm = xₘ(k) - xₘ(k-1). Afterwards, the metric is compared to a slope threshold sth, as another input parameter for the inventive method. Useful range for slope threshold depends on system parameters (e.g. sampling frequency), signal statistics and magnitude threshold. Within that useful range, the slope threshold may be optimized to suite individual needs. For example, extensive simulation will be used to obtain sth for a certain scenario. When the metric exceeds the slope threshold sth, a compression function f₂ optimized for high peaks is selected. Otherwise, a compression function f₁ optimized for lower peaks is selected.

So, in an embodiment of the inventive method, a first signal compression function f₁ is used when the metric falls below the slope threshold.

And in another embodiment of the inventive method, a second signal compression function f₂ is used when the metric exceeds the slope threshold.

In a further embodiment of the inventive method, the signal compression function f is a piece-wise defined function.

Various types of functions f() can be used for compression. As an example, a piece-wise defined function with a linear section 'a', a quadratic section 'b' and a constant section 'c' is depicted in figure 7.

In a preferred embodiment of the inventive method, more than one slope threshold is used and more than two different signal compression functions are selected. This has the advantage that compression can be adapted more fine-granular to signal statistics.

In another preferred embodiment of the inventive method, more than one magnitude threshold is defined, whereas at each transition of said magnitude threshold a decision between two or more signal compression functions are triggered. This has the advantage and effect that if decision metric at the chosen magnitude threshold does not provide a very reliable decision criterion, the process can be repeated at another magnitude threshold again.

In an embodiment of the inventive method, a higher order than first derivative over time of the input signal as a decision metric is calculated. This has the advantage that for some modulation schemes the reliability of the decision can be improved.

In a further embodiment of the inventive method, a transfer function other than a linear function during time intervals is used where the magnitude of the input signal remains below the pre-defined magnitude threshold. For example, it is possible to incorporate digital predistortion into the compression block. Incorporating other functionality into a block for PAPR reduction allows for reduction of overall effort in terms of e.g. gate count and power consumption.

In another further embodiment of the inventive method, when the input signal magnitude is below the defined magnitude threshold, samples of the input signal are passed through without modification.

The compression block applies the selected non-linear compression function each of the subsequent input samples to generate corresponding output samples until the input signal magnitude falls below the magnitude threshold. From this time, compression shall be disabled; input samples are passed through without modification. In general, the neutral operation of the signal compression block during periods without compression can be considered as linear compression function and formally considered in the entire compression function.

The invention will be explained in more detail using exemplary embodiments.

The appended drawings show
- Fig. 1: SC-FDMA signal spectrum and spectral mask;
- Fig. 2: Inventive method using a selection algorithm and a signal compression function;
- Fig. 3: Inventive method using two compression functions f₁ and f₂ and one magnitude threshold mth and one slope threshold sth;
- Fig. 4: Magnitude of a typical SC-FDMA signal over time (state of the art);
- Fig. 5: Digital saturation in time domain - compression by hard limitation (state of the art);
- Fig. 6: Typical SC-FDMA signal when applying a digital saturation and time domain filtering;
- Fig. 7: A piece-wise defined function for compression;
- Fig. 8: Applying a single compression function on each sample;
- Fig. 9: Illustration of key points for the compression selection algorithm on a typical SC-FDMA signal;
- Fig. 10: Illustration of Two piece-wise defined compression functions;
- Fig. 11: Illustration of a typical magnitude waveform at the output of the algorithm;
- Fig. 12: Illustration of more than two compression functions.

Figure 2 shows a most abstract form of the inventive method performed by a PAPR limiter of a transmitter device. The invented method comprises of a selection algorithm 1 for a signal compression function and a signal processing block 2 that performs the actual signal compression, aiming a reduction of PAPR to a certain target PAPR. An input signal x(k) is analyzed and processed by the signal processing block 2, whereas an signal y(k) is outputted according to the compression function selected by the selection algorithm 1.

Figure 3 shows the inventive method using one magnitude threshold mth, one slope threshold sth and two signal compression functions f₁ and f₂. The selection algorithm 1 detects the moment when the input signal magnitude exceeds a certain magnitude threshold mth the first time. At this moment, the first-order derivative over time of the input signal (i.e. the magnitude difference of consecutive samples) is calculated as decision metric: dm = xm(k) - xm(k-1). Afterwards, the metric is compared to a slope threshold sth. When the metric exceeds the threshold sth, a compression function f₂ optimized for high peaks is selected. Otherwise, a compression function f₁ optimized for lower peaks is selected. The compression block applies the selected non-linear compression function each of the subsequent input samples to generate corresponding output samples until input signal magnitude falls below the magnitude threshold. From this time, compression shall be disabled, input samples are passed through without modification. Then, the whole process starts from the beginning. In general, the neutral operation of the signal compression block during periods without compression can be considered as linear compression function and formally considered in the entire compression function.

Various types of functions f() can be used for compression. As an example, figure 7 depict a piece-wise defined function with a linear section 'a', a quadratic section 'b' and a constant section 'c'.

Static application of a single compression function on each sample alone would apply compression of peaks exceeding the target PAPR, which is desired. However, some compression would also be applied to peaks that reach their maximum just below the target PAPR. For illustration refer to figure 8 where wanted compression is applied during time interval 'd' while unwanted compression is applied during time interval `e'. This unwanted compression is a side effect of the static application of compression function f() that increases spectral emissions and EVM.

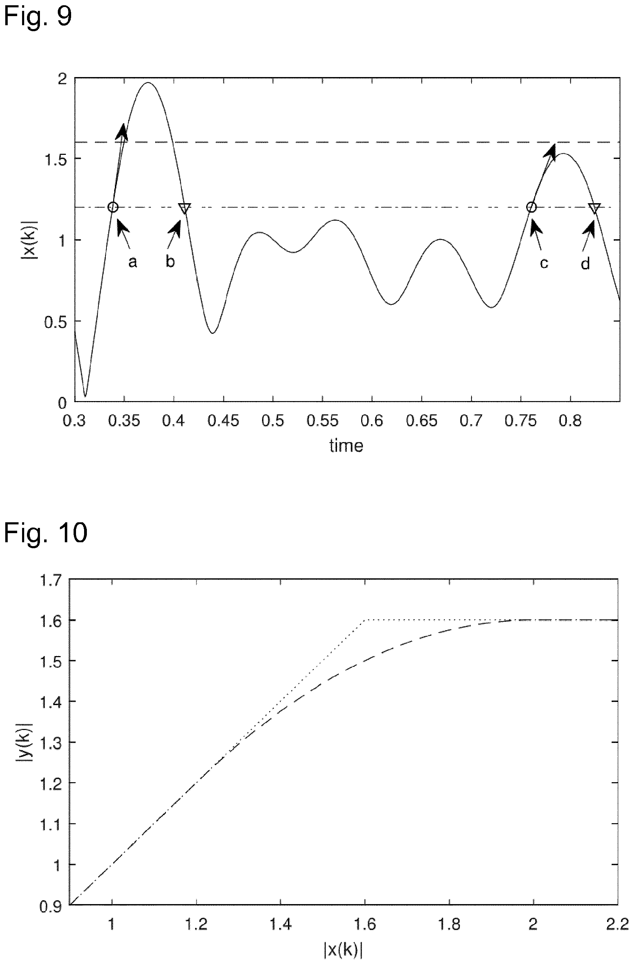

Figure 9 illustrates key points for the compression selection algorithm on a typical SC-FDMA signal. The magnitude threshold mth is depicted as dashed-dotted line. When the signal crosses mth in point 'a', first-order derivative metric (depicted as arrow) is calculated. At this point, the metric will likely exceed slope threshold sth and compression function f₂ is selected. f₂ is now applied to the signal until point 'b' is reached where input signal magnitude drops below magnitude threshold mth. From there, no compression is applied until input signal magnitude again reaches threshold mth in point `c'. Here, the metric is calculated again. But this time, the metric does not exceed slope threshold sth. Hence, compression function f₁ is selected and applied until input signal magnitude drops below mth in point 'd'.

In an example implementation, two piece-wise defined compression functions can be selected: Function f₁ comprises a linear section up to the clipping target and a constant section for higher input magnitudes. Function f₂ comprises a linear section up to the magnitude threshold, a quadratic section and a constant section for higher input magnitudes. A quadratic function has been chosen here for implementation simplicity. This is illustrated in figure 10 where the line with small dashes reflects function f₁ and the line with large dashes function f₂.

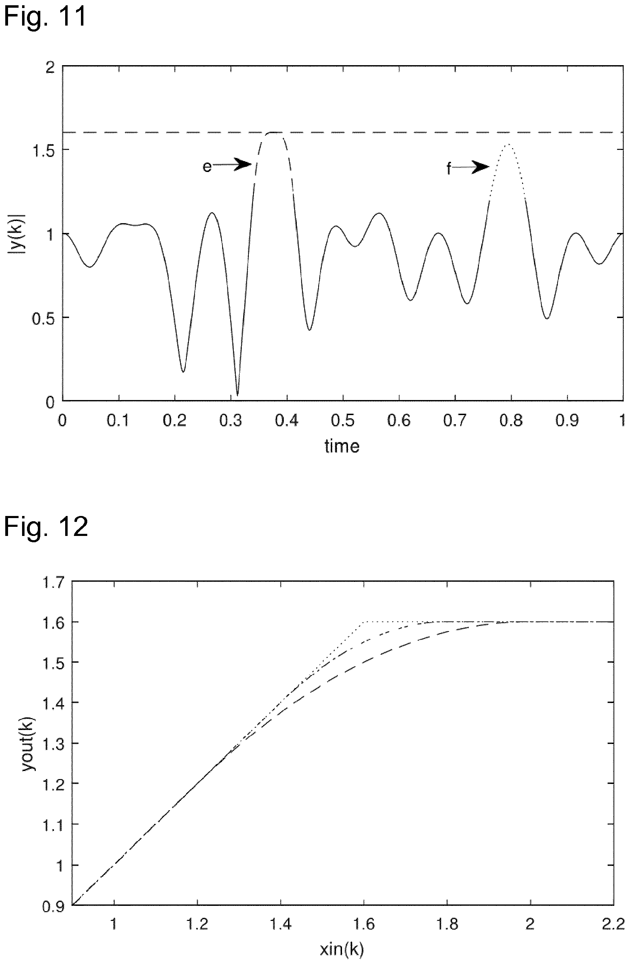

A typical magnitude waveform at the output of the algorithm is depicted in figure 11 where compression function f₂ has been applied to time interval `e' whereas compression function f₁ has been applied to time interval 'f'.

In an embodiment of the inventive method the selection algorithm can select out of more than two different compression functions, based on more than one slope threshold. This is illustrated in figure 12.

### List of Reference Signs

- 1: Selection algorithm
- 2: signal processing block
- 3: PSD over frequency of an uncompressed signal
- 4: PSD over frequency of a signal with low compression
- 5: PSD over frequency of a signal with high compression
- 6: PSD over frequency of a signal violating spectral mask requirements

## Claims

1. A method for reduction of signal peak to average power of an input signal of a transmitter device comprising the following steps:
- detecting a moment in time by a selection algorithm (1) when an input signal magnitude exceeds a magnitude threshold mth a first time,
- calculating a first order derivative over time of the input signal at the moment in time as a decision metric,
- comparing the metric with a slope threshold sth,
- selecting a signal compression function depending on whether the metric exceeds or falls below the slope threshold,
- performing a signal compression by a signal processing block (2) on a sample by sample basis, wherein the selected signal compression function is applied to each of subsequent input samples without considering the history of the input signal in time to generate corresponding output samples until the input signal magnitude falls below the magnitude threshold mth.

2. The method for reduction of signal peak to average power of an input signal according to claim 1, wherein the input signal is OFDM or SC-FDMA modulated.

3. The method for reduction of signal peak to average power of an input signal according to claim 1, wherein a first signal compression function f₁ is used when the metric falls below the slope threshold.

4. The method for reduction of signal peak to average power of an input signal according to claim 1, wherein a second signal compression function f₂ is used when the metric exceeds the slope threshold.

5. The method for reduction of signal peak to average power of an input signal according to one of the former claims, wherein the signal compression function f is a piece-wise defined function.

6. The method for reduction of signal peak to average power of an input signal according to one of the former claims, wherein more than one slope threshold is used and more than two different signal compression functions are selected.

7. The method for reduction of signal peak to average power of an input signal according to one of the former claims, wherein more than one magnitude threshold is defined, whereas at each transition of said magnitude threshold a decision between two or more signal compression functions are triggered, whereas the method can be repeated at another magnitude threshold again.

8. The method for reduction of signal peak to average power of an input signal according to claim 1, wherein a higher order than first derivative over time of the input signal as a decision metric is calculated.

9. The method for reduction of signal peak to average power of an input signal according to claim 1, wherein a transfer function other than a linear function during time intervals is used where the magnitude of the input signal remains below the defined magnitude threshold.

10. The method for reduction of signal peak to average power of an input signal according to one of the former claims, wherein when the input signal magnitude is below the defined magnitude threshold samples of the input signal are passed through without modification.

## Patentansprüche

1. Verfahren zur Reduzierung der Signalspitze auf die mittlere Leistung eines Eingangssignals einer Sendevorrichtung, umfassend die folgenden Schritte:
- Detektieren eines Zeitpunkts durch einen Auswahlalgorithmus (1), wenn ein Umfang eines Eingangssignals erstmals einen Umfangsschwellenwert mth überschreitet,
- Berechnen einer Ableitung erster Ordnung im Zeitverlauf des Eingangssignals zu dem Zeitpunkt als eine Entscheidungsmetrik,
- Vergleichen der Metrik mit einem Steigungsschwellenwert sth,
- Auswahl einer Signalkompressionsfunktion in Abhängigkeit davon, ob die Metrik den Steigungsschwellenwert übersteigt oder darunter fällt,
- Durchführen einer Signalkompression durch einen Signalverarbeitungsblock (2) auf Basis von Stichproben, wobei die gewählte Signalkompressionsfunktion auf jede von nachfolgenden Eingangsproben angewandt wird, ohne die Historie des Eingangssignals im Zeitverlauf zu berücksichtigen, um entsprechende Ausgangsproben zu erzeugen, bis der Umfang des Eingangssignals unter den Umfangsschwellenwert mth fällt.

2. Verfahren zur Reduzierung der Signalspitze auf die mittlere Leistung eines Eingangssignals nach Anspruch 1, wobei das Eingangssignal OFDM- oder SC-FDMA-moduliert ist.

3. Verfahren zur Reduzierung der Signalspitze auf die mittlere Leistung eines Eingangssignals nach Anspruch 1, wobei eine erste Signalkompressionsfunktion f₁ verwendet wird, wenn die Metrik unter den Steigungsschwellenwert fällt.

4. Verfahren zur Reduzierung der Signalspitze auf die mittlere Leistung eines Eingangssignals nach Anspruch 1, wobei eine zweite Signalkompressionsfunktion f₂ verwendet wird, wenn die Metrik den Steigungsschwellenwert übersteigt.

5. Verfahren zur Reduzierung der Signalspitze auf die mittlere Leistung eines Eingangssignals nach einem der vorstehenden Ansprüche, wobei die Signalkompressionsfunktion f eine stückweise definierte Funktion ist.

6. Verfahren zur Reduzierung der Signalspitze auf die mittlere Leistung eines Eingangssignals nach einem der vorstehenden Ansprüche, wobei mehr als ein Steigungsschwellenwert verwendet wird und mehr als zwei unterschiedliche Signalkompressionsfunktionen ausgewählt werden.

7. Verfahren zur Reduzierung der Signalspitze auf die mittlere Leistung eines Eingangssignals nach einem der vorstehenden Ansprüche, wobei mehr als ein Umfangsschwellenwert definiert ist, während bei jedem Übergang des Umfangsschwellenwerts eine Entscheidung zwischen zwei oder mehr Signalkompressionsfunktionen ausgelöst wird, wobei das Verfahren bei einem anderen Umfangsschwellenwert erneut wiederholt werden kann.

8. Verfahren zur Reduzierung der Signalspitze auf die mittlere Leistung eines Eingangssignals nach Anspruch 1, wobei eine Ableitung höherer Ordnung als der ersten im Zeitverlauf des Eingangssignals als eine Entscheidungsmetrik berechnet wird.

9. Verfahren zur Reduzierung der Signalspitze auf die mittlere Leistung eines Eingangssignals nach Anspruch 1, wobei eine andere Übertragungsfunktion als eine lineare Funktion während Zeitintervallen verwendet wird, wobei der Umfang des Eingangssignals unterhalb des definierten Umfangsschwellenwerts bleibt.

10. Verfahren zur Reduzierung der Signalspitze auf die mittlere Leistung eines Eingangssignals nach einem der vorstehenden Ansprüche, wobei, wenn der Umfang des Eingangssignals unterhalb des definierten Umfangsschwellenwerts ist, Proben des Eingangssignals ohne Abänderung durchgeleitet werden.

## Revendications

1. Procédé de réduction du ratio puissance de crête sur puissance moyenne de signal d'un signal d'entrée d'un dispositif d'émetteur, comprenant les étapes suivantes :
- la détection d'un instant temporel par un algorithme de sélection (1) auquel une amplitude de signal d'entrée excède un seuil d'amplitude mth une première fois,
- le calcul d'une dérivée de premier ordre en fonction du temps du signal d'entrée à l'instant temporel en tant que mesure de décision,
- la comparaison de la mesure avec un seuil de pente sth,
- la sélection d'une fonction de compression de signal en fonction de si la mesure excède le seuil de pente ou tombe en-deçà de ce même seuil de pente,
- la réalisation d'une compression de signal par un bloc de traitement de signal (2) sur une base échantillon par échantillon, dans lequel la fonction de compression de signal sélectionnée est appliquée à chacun d'échantillons d'entrée subséquents sans considération de l'historique du signal d'entrée dans le temps pour générer des échantillons de sortie correspondants jusqu'à ce que l'amplitude de signal d'entrée tombe en-deçà du seuil d'amplitude mth.

2. Procédé de réduction du ratio puissance de crête sur puissance moyenne de signal d'un signal d'entrée selon la revendication 1, dans lequel le signal d'entrée est modulé OFDM ou SC-FDMA.

3. Procédé de réduction du ratio puissance de crête sur puissance moyenne de signal d'un signal d'entrée selon la revendication 1, dans lequel une première fonction de compression de signal f₁ est utilisée lorsque la mesure tombe en-deçà du seuil de pente.

4. Procédé de réduction du ratio puissance de crête sur puissance moyenne de signal d'un signal d'entrée selon la revendication 1, dans lequel une seconde fonction de compression de signal f₂ est utilisée lorsque la mesure excède le seuil de pente.

5. Procédé de réduction du ratio puissance de crête sur puissance moyenne de signal d'un signal d'entrée selon l'une quelconque des revendications précédentes, dans lequel la fonction de compression de signal f est une fonction définie morceau par morceau.

6. Procédé de réduction du ratio puissance de crête sur puissance moyenne de signal d'un signal d'entrée selon l'une quelconque des revendications précédentes, dans lequel plus d'un seuil de pente sont utilisés et plus de deux fonctions de compression de signal différentes sont sélectionnées.

7. Procédé de réduction du ratio puissance de crête sur puissance moyenne de signal d'un signal d'entrée selon l'une quelconque des revendications précédentes, dans lequel plus d'un seuil d'amplitude sont définis, tandis que, pour chaque transition dudit seuil d'amplitude, une décision entre deux fonctions de compression de signal ou plus est déclenchée, tandis que le procédé peut être répété pour un autre seuil d'amplitude à nouveau.

8. Procédé de réduction du ratio puissance de crête sur puissance moyenne de signal d'un signal d'entrée selon la revendication 1, dans lequel une dérivée en fonction du temps d'un ordre plus élevé que le premier ordre du signal d'entrée en tant que mesure de décision est calculée.

9. Procédé de réduction du ratio puissance de crête sur puissance moyenne de signal d'un signal d'entrée selon la revendication 1, dans lequel une fonction de transfert autre qu'une fonction linéaire pendant des intervalles temporels est utilisée lorsque l'amplitude du signal d'entrée reste en-deçà du seuil d'amplitude défini.

10. Procédé de réduction du ratio puissance de crête sur puissance moyenne de signal d'un signal d'entrée selon l'une quelconque des revendications précédentes, dans lequel, lorsque l'amplitude de signal d'entrée est en-deçà du seuil d'amplitude défini, les échantillons du signal d'entrée sont transférés sans modification.
